# DEMANDE DE BREVET EUROPEEN

(11) **EP 2 325 750 A1**
(43) Date de publication de la demande: **25.05.2011**
(21) Numéro de dépôt: 09306054.9
(22) Date de dépôt: 03.11.2009
(51) Int. Cl.: G06F 11/00, G06F 11/14

(54) **Procédé de surveillance de l'activité informatique d'un dispositif électronique**

(71) Demandeur: Gemalto SA, 92190 Meudon (FR)
(72) Inventeur: Bordron, Damien, 83680 Nans les Pins (FR); Amiel, Patrice, 13290 Aix-les-milles (FR); Paillard, Frédéric, 13090 Aix-en-Provence (FR)

(57) **Abrégé**

L'invention propose un procédé de sauvegarde, par un premier dispositif, de l'activité d'un programme cible hébergé sur un second. Un programme hébergé dans ce premier dispositif est en charge de recevoir et d'enregistrer tout ou partie de 1 activité du programme cible.

Afin de restaurer le programme cible suite à, par exemple une interruption, ou bien afin de rejouer son activité passée, l'invention propose également un procédé de restauration de cette sauvegarde.

## Description

L'invention concerne un procédé de sauvegarde de l'activité informatique d'un dispositif électronique.

L'invention porte en particulier sur l'utilisation d'un second dispositif afin de garder une trace de l'activité informatique d'un premier dispositif électronique, voire de la restaurer.

Les dispositifs électroniques, notamment nomades, embarquent de plus en plus d'applications informatiques. Parmi ces dispositifs électroniques, les téléphones portables sont une illustration particulièrement pertinente de cette croissance exponentielle des applications.

En effet, aujourd'hui il est possible de trouver des applications de toute sorte, installables sur la majorité des téléphones portables.

Ces dispositifs électroniques, de par leur mobilité, sont d'autant plus sensibles à des extinctions impromptues.

En effet, les interruptions d'exécution sont courantes sur tous les dispositifs électroniques, mais le fonctionnement énergétiquement autonome des dispositifs nomades favorise les coupures accidentelles d'énergie. Une interruption du fonctionnement normal d'un dispositif électronique peut également avoir lieu suite à un accident physique de celui-ci,ou à une erreur logicielle, (couramment appelée "blocage", ou "crash"), ou encore à une action malveillante.

En effet, une méthode couramment usitée, de tentative de piratage d'un dispositif électronique, se base sur un arrêt intempestif de celui-ci lors d'une action particulière (par exemple lors d'une écriture mémoire).

Toutes ces perturbations dans l'exécution d'un programme informatique par un dispositif électronique ne sont que la partie émergeante du problème, la vrai question restant, comment réagir suite à de telles perturbations ?

Les réactions possibles sont limitées par trois paramètres :
- La connaissance de la perturbation,
- L'identification des "victimes"
- La mémoire du passé.

Pour pouvoir réagir, un système (le terme système sera généralement utilisé pour désigner un dispositif électronique ainsi que les logiciels basiques qui l'accompagnent tels que le système d'exploitation) doit être en mesure de se rendre compte qu'une perturbation a eu lieu. Il existe des mécanismes tels que des écritures dans une mémoire non volatile qui permettent cela, mais la fiabilité de ces mécanismes embarqués dans le dispositif électronique victime des perturbations, est toute relative.

Une fois que la perturbation a été avérée, faut-il encore être en mesure d'identifier les processus, les programmes, et autres activités informatiques ou électroniques qui étaient en cours d'exécution lors de l'évènement. A ce jour il n'y a pas de mécanismes permettant cela dans les dispositifs électroniques courants. Il est certes possible, en exécutant un programme, que celui-ci se rende compte qu'il a subit une interruption intempestive lors de sa dernière exécution, mais il n'est pas possible au système d'exploitation, de relancer lui-même les programmes interrompus. Même si de tels mécanismes étaient mis en place, leur fiabilité, comme les mécanismes de détection décrits plus haut, serait sujette à caution par le seul fait qu'ils sont partie du dispositif perturbé.

Une fois la perturbation détectée, et une exécution interrompue hypothétiquement identifiée, reste à savoir quel a été le déroulement de cette exécution avant son interruption.

Des mécanismes, notamment dans le monde de Microsoft Windows, permettent de restaurer un programme dans l'état dans lequel il était lors de sa dernière interruption. Ces mécanismes restaurent un contexte, comme il serait fait d'une photo, en revanche ils sont incapables de reproduire les actions informatiques ou électroniques qui ont emmené à cet état, à cette photo.

De plus, comme pour les points précédents, ces mécanismes sont hébergés par le dispositif perturbé, et leur fiabilité s'en trouve émaciée.

La présente invention propose d'associer un second dispositif électronique muni de moyens physiques et logiques résistants aux perturbations, pour assurer la robustesse d'un premier dispositif électronique face à de telles perturbations.

L'invention est, dans un premier temps, un procédé de sauvegarde de l'activité informatique d'un dispositif électronique dit terminal, comprenant au moins un microprocesseur, une mémoire non volatile, et une mémoire de travail, au moins une application informatique dite programme client, le terminal étant apte à communiquer avec un second dispositif électronique dit module de sécurité, contenant au moins un microprocesseur, et une mémoire non volatile. Ce procédé comprenant au moins les étapes de :
- Activation d'un programme informatique dit "veilleur numérique", dans le module de sécurité, et définition d'une durée dite "période"
- Réception, par le "veilleur numérique", d'informations, issues du programme client,
- Enregistrement, dans une mémoire non volatile du module de sécurité, de tout ou partie des informations, dans une mémoire non volatile du module de sécurité

Dans le cas ou le délai entre la réception de deux informations excède la "période", le "veilleur numérique" peut entamer une procédure de "restauration".

Cette étape de restauration peut consister par exemple en une écriture, dans une mémoire non volatile de l'élément sécurisé, d'une information indiquant la nécessité de restaurer l'application client. Cette étape de restauration peut également consister en l'envoi d'un message.

Dans un mode d'implémentation de l'invention, l'information reçue peut être par exemple un message "vide", dit PING. L'information reçue peut également être un événement lié à l'exécution du programme client, par exemple une commande liée au programme client. Cette information peut également être un contexte lié au programme client.

L'envoi de l'information peut être réalisé par une partie du système d'exploitation du terminal, ou bien par un programme indépendant, exécuté sur le terminal.

Dans un mode d'implémentation, un moyen d'identification du programme client est associé à l'information lors de son enregistrement.

L'invention comprend, dans un second temps, un procédé de restauration de l'activité informatique d'un dispositif électronique dit terminal, comprenant au moins un microprocesseur, une mémoire non volatile, et une mémoire de travail, au moins une application informatique dite programme client, le terminal étant apte à communiquer avec un second dispositif électronique dit module de sécurité, contenant au moins un microprocesseur, une mémoire non volatile, et une mémoire de travail. Ce procédé comporte au moins les étapes de :
- activation d'un programme informatique dit "veilleur numérique", dans le module de sécurité,
- lecture, dans la mémoire non volatile du module de sécurité d'une information indiquant la nécessité de restaurer l'application client
- activation d'au moins un programme informatique dit application client, sur le terminal
- lecture dans la mémoire non volatile du module de sécurité, d'au moins un évènement informatique enregistré
- transmission de tout ou partie de l'évènement informatique lu, au programme client.

Selon le mode d'implémentation, tout ou partie de l'évènement lu, peut contenir tout ou partie d'un contexte.

Préalablement à l'envoi de tout ou partie de l'évènement lu, au programme client, le "veilleur numérique" peut transmettre au terminal les éventuelles informations liées au contexte d'exécution de l'évènement, et ordonner au terminal la restauration de ce contexte.

L'invention porte également sur un programme informatique, exécuté sur un premier dispositif électronique, permettant l'enregistrement et la restauration de l'activité d'au moins un autre programme informatique dit client, exécuté sur un deuxième dispositif électronique, ce programme comportant au moins des moyens pour :
- recevoir des informations liées à l'exécution du programme client,
- enregistrer tout ou partie des informations dans une mémoire non volatile du premier dispositif électronique
- ordonner l'exécution du programme client sur le deuxième dispositif électronique
- envoyer tout ou partie des informations au programme client

Selon un mode d'implémentation, tout ou partie des informations peuvent être des événements informatiques, ou bien ces informations peuvent contenir tout ou partie d'un contexte.

Dans le cas ou les informations contiennent tout ou partie d'un contexte, le programme peut comporter des moyens pour :
- transmettre au terminal le contexte,
- ordonner au terminal la restauration de ce contexte

D'autres caractéristiques et avantages de l'invention ressortiront clairement de la description qui en est faite ci-après, à titre indicatif et nullement limitatif, en référence aux dessins annexés dans lesquels :
- La figure 1 illustre le monitorage selon l'invention d'un programme client exécuté sur un terminal, représenté par un téléphone. Le monitorage est assuré par un "veilleur numérique" selon l'invention, embarqué dans un module de sécurité illustré par une carte à puce.
- La figure 2 représente le fonctionnement de l'invention dans un mode ou le "veilleur numérique" selon l'invention restaure le fonctionnement d'un programme client.

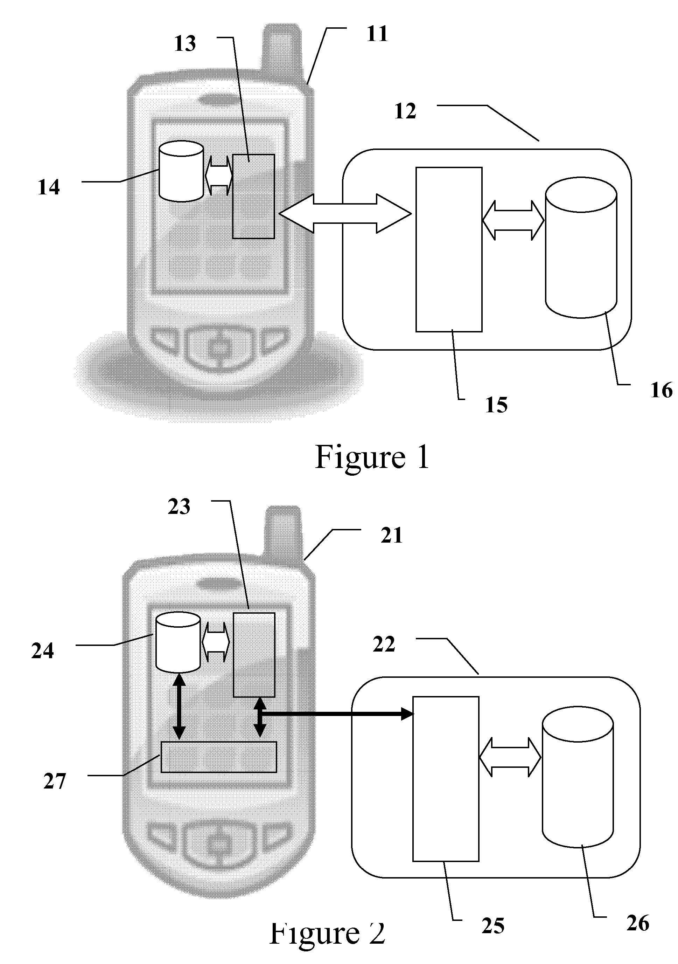

La figure 1, illustre un exemple d'implémentation de l'invention dans le monde de la téléphonie mobile.

Nous pouvons voir un téléphone mobile 11, et une carte à puce 12. Cette carte à puce est avantageusement une carte SIM (Subscriber Identity Module).

La figure 1 fait apparaitre, dans le téléphone 11, un programme client 13, exécuté dans le téléphone.

Selon l'invention, l'activité du programme client 13 est monitorée par un programme externe au téléphone 11, le "veilleur numérique" 15, présent sur la carte à puce 12, elle même insérée dans le téléphone 11. Le terminal et le module de sécurité peuvent communiquer par tous les moyens connus de l'état de la technique, afin de mettre en oeuvre l'invention. Le mode illustré par la figure 1, dans lequel les deux dispositifs sont directement en contact est un mode avantageux, offrant de bonnes performances en termes de rapidité de communication. Toutefois les autres procédés connus de communication électronique, et notamment les communications sans contact (radiofréquence, infrarouge, ...) ainsi que les protocoles de communication réseau, sont compatibles avec la mise en oeuvre de l'invention.

Le terme de monitorage est ici employé pour désigner un suivi étroit de l'activité informatique d'un programme. En effet, ce monitorage ("monitoring" en anglais) va au delà d'un simple suivi de l'exécution du programme à monitorer, mais inclue un ensemble de dialogues entre l'application de monitorage, et le programme client à monitorer.

Le monitorage va comporter notamment un enregistrement, dans une mémoire non volatile, d'éléments concernant l'exécution du programme client 13, et fournis au "veilleur numérique".

Dans un premier temps, l'application "veilleur numérique" est "activée" par la requête de monitorage. Le "veilleur numérique" crée une "session", dédiée au programme client 13. Dans un mode particulier d'implémentation de l'invention, le "veilleur numérique" peut être en mesure d'avoir plusieurs session en parallèle, si plusieurs applications (ou plusieurs sessions d'une même application) ont requis en même temps un monitorage.

Des lors, le "veilleur numérique" va être en mesure d'enregistrer, dans une mémoire non volatile, tout ou partie des éléments concernant le programme client concerné, qu'il va recevoir.

Un but de ce monitorage est de pouvoir réagir face à une interruption fortuite de l'exécution du programme client 13. Le "veilleur numérique" doit donc, dans un premier temps, mémoriser des informations concernant l'identité du programme client 13, et notamment un moyen de la redémarrer en cas d'interruption. Cette étape est aussi appelée restauration, et illustrée dans la figure 4. Plusieurs solutions sont possibles, par exemple enregistrer la localisation de cette application dans la mémoire du téléphone 11, afin d'être en mesure d'ordonner son exécution (le "chemin" de l'exécutable permettant de démarrer le programme client). Une autre solution consiste en la mémorisation d'éléments suffisants pour demander au système d'exploitation du téléphone de redémarrer le programme client 13, si ce système d'exploitation offre de tels services.

Pour assurer le service attendu, le "veilleur numérique" doit recevoir les éléments indispensables à l'exécution du programme client 13, et les mémoriser.

Ces éléments peuvent prendre toute forme, notamment des entrées de données externes (de l'utilisateur, d'un port de communication, d'une autre application, ...). En effet ce sont, entre autres, ces données externes qui permettront, éventuellement, de "rejouer", ou de "restaurer" l'exécution du programme client 13.

Le terme de "rejouer" est ici employé dans le sens où, l'exécution d'un programme est constituée d'une succession de commandes informatiques. Cette succession de commandes est dépendante des paramètres de l'exécution. En effet de manière générale, un programme informatique démarre toujours de la même façon, et ce sont les "choix" ultérieurs qui vont décider du déroulement du programme.

Par exemple, si nous prenons le cas simple d'un programme de machine à calculer. Lors de son démarrage, le programme affiche toujours le clavier, l'écran vierge, et prépare des zones mémoire "vides" pour les calculs à venir.

Ce sont ensuite les chiffres qui vont être entrés, et les opérations sélectionnées qui vont décider de la succession concrète de commandes réellement exécutées. Le "rejeu" au sens de la présente invention peut consister, en partant du programme client tel qu'il est lors de son démarrage, de lui refournir l'ensemble des informations nécessaire pour reproduire une succession de commandes la plus proche possible (si possible identique) de la succession à rejouer. Dans le cadre du programme de machine à calculer, cela se traduit par le fait de refournir au programme client les mêmes valeurs, et les mêmes opérations dans le même ordre.

La figure 4 décrit un "veilleur numérique" 25, contenu dans un module de sécurité symbolisé par une carte à puce 22 et ayant mémorisé des éléments conformément à l'invention dans une mémoire non volatile 26. Ce module de sécurité communique avec un terminal illustré par un téléphone 21, contenant un programme client 23. Les éléments enregistrés l'ont été lors d'une session de monitorage de l'activité du programme client 23 conforme à l'invention.

Pour initier la restauration selon l'invention, le "veilleur numérique" 25 ordonne l'exécution du programme client 23 selon les options décrites plus haut.

Une fois le programme client 23 exécuté, le "veilleur numérique" va renvoyer les éléments qu'il a mémorisés, dans l'ordre chronologique dans lequel il les a reçus.

Si le programme client 23 est prévu pour cette fonctionnalité, cela peut se faire directement entre le "veilleur numérique" et le programme client 23 ; Dans le cas ou le programme client 23 ne possède pas de telles fonctionnalités, le "veilleur numérique" va dialoguer avec le système d'exploitation 27 du téléphone 21, afin de transmettre les informations au programme client, par son intermédiaire.

Dans ce mode de réalisation la restauration peut être parfaitement transparente pour le programme client 23, qui ne fera pas de distinction entre les informations qu'elle reçoit lors d'une exécution normale, et celles issues du "veilleur numérique" lors d'une restauration.

Si le "veilleur numérique" est apte à mémoriser des informations, et à les restituer, la fourniture de ces informations ne dépend pas de lui. En effet, le "veilleur numérique" ne peut traiter que les informations qu'il reçoit.

Ces informations peuvent être fournies par deux sources bien distinctes.
- elles peuvent être fournies par le programme client 13 lui même. Dans ce cas, cela implique que, dans le code même qui compose le programme client 13, les commandes nécessaires à l'exploitation du "veilleur numérique" sont présentes. Ainsi le programme client décide des informations à envoyer au "veilleur numérique". Ce mode de réalisation est celui qui permet d'obtenir les meilleurs résultats, car, nul autre que le programme client 13 lui même ne peut être apte à juger aussi bien de l'intérêt de telle ou telle information.
- elles peuvent être fournies par le système d'exploitation du dispositif électronique hébergeant le programme client 13 (le téléphone 11 dans la figure 2). Cette solution permet de ne pas avoir à adapter toutes les éventuelles applications 13.

Les informations transmises au "veilleur numérique" à ce stade de l'invention peuvent être de deux ordres :
- des valeurs, ou bien des paramètres. Ou toute autre information qui puisse être injectée dans l'application lors du rejeu.
- des contextes. Un contexte est une sorte d'image de toute ou partie de la mémoire à un instant donné. Dans le cadre de l'invention, le contexte est lié à l'application 13 à monitorer. Ce ou ces contextes comprennent donc tout ou partie des zones mémoires 14 utilisées par cette application 13, et notamment les piles mémoire, les valeurs de registres ... Ces contextes ont la particularité de ne pas être "rejouable" auprès de l'application, comme les paramètres précédents. Mais ils doivent être restaurés dans la mémoire 24 du dispositif 21 accueillant l'application 23. Cette opération n'est pas à la portée de l'application 13 elle même, et nécessite le concours du système d'exploitation 27. L'usage des contextes ne peut donc se faire que dans les modes d'implémentation qui impliquent le système d'exploitation 27. Dans l'exemple de la machine à calculer, l'utilisation de contexte permettrait, par exemple, d'enregistrer les valeurs à l'écran ainsi que les éventuelles valeurs en mémoire. Ainsi une restitution d'un tel contexte permettrait de revenir à l'état présent, sans avoir à rejouer l'ensemble des opérations qui ont pu y mener.
- Le plus souvent, les informations transmises au "veilleur numérique" seront conjointement des informations et des contextes.

En parallèle de cette fonction d'enregistrement de l'activité d'une application, le "veilleur numérique" peut avantageusement avoir également une activité de veille.

La veille s'entend ici comme le fait de surveiller que le programme client 13 fonctionne toujours correctement.

Cette activité est particulièrement intéressante pour déclencher la procédure de restauration du programme client 23. En effet, si le "veilleur numérique" est capable de détecter une fin d'activité du programme client 13, il peut tenter de restaurer son fonctionnement selon le procédé de l'invention.

Pour cela le "veilleur numérique" peut mettre en place un protocole d'échange au cours duquel il va attendre, à différents intervalles de temps dits périodes, un signal du programme client qu'il monitore. Ce signal peut prendre toutes les formes possibles des trames connues de communications électroniques, notamment un "PING".

Dans un mode simple d'implémentation de l'invention, au moins un compteur de temps est activé lors de l'initialisation de la session du "veilleur numérique", et un signal va être attendu à des repères temporels précis. Dans ce mode d'implémentation la durée qui sépare chaque repère temporel peut être également appelé "période". Les périodes pouvant donc être variables.

Dans un autre mode d'implémentation, un compteur de temps est activé lors de l'initialisation de la session du "veilleur numérique" et sa valeur est remise à zéro à chaque réception d'un signal attendu.

Dans un autre mode d'implémentation, le "veilleur numérique" envoie une ou plusieurs requêtes à l'application 13, et, attend une réponse de sa part durant un délai dit période, défini.

Un mode particulièrement avantageux peut prévoir, en fonction des valeurs relevées par des capteurs, de faire varier la ou les valeurs de périodes. Ainsi, dans des situations particulières, par exemple suite à un comportement reconnu, les périodes peuvent être baissées afin d'exiger une réactivité accrue de l'application monitorée. A l'inverse, dans des conditions difficiles, par exemple sur-occupation du processeur du terminal, les périodes peuvent être rallongées. Sont appelés capteurs, tout moyen logique ou physique, permettant de relever une valeur liée à un état.

Un tel mécanisme d'analyse des paramètres issus de un ou plusieurs capteurs, est partie intégrante de la présente invention.

Dans tous ces cas, si le signal n'est pas reçu dans les délais impartis, le "veilleur numérique" peu conclure en un disfonctionnement de l'application 13, et ainsi prendre des mesures prévues dans ce cas précis. Par exemple initier une restauration de l'activité de l'application.

Dans le cas ou le "veilleur numérique" a été initié par le système d'exploitation du dispositif hébergeant l'application 13, et non par elle même, le service de veille du "veilleur numérique" communiquera avantageusement avec le système d'exploitation, qui se chargera de reporter l'état de l'application 13, conformément aux exemples décrits ci-avant.

Dans un mode particulier d'implémentation, le "veilleur numérique" peut être utilisé comme outil de traçage de l'exécution d'une application, sans restauration automatisée. En effet, le "veilleur numérique", par sa localisation dans un dispositif indépendant, et sa capacité d'enregistrement d'information, peut être avantageusement utilisé à une fin pure de traçage de l'exécution. Cette fonctionnalité peut par exemple être utilisée dans une volonté de non répudiation, afin de garder une preuve de l'exécution d'un programme.

Dans ce mode d'implémentation le rejeu devient optionnel, et non plus déclenché par une détection de disfonctionnement du programme client, mais sur ordre.

Dans ce mode de réalisation, un fonctionnement dans le mode des boites noires des avions est par exemple envisageable. Fonctionnement lors duquel le "veilleur numérique" enregistre des évènements, et ne les rejoue que si la consultation est demandée, et autorisée. En effet les propriétés de sécurité intrinsèques du module de sécurité contenant le "veilleur numérique" (par exemple une puce de type carte à puce) rendent très aisé le contrôle d'accès aux informations enregistrées.

## Revendications

1. Procédé de sauvegarde de l'activité informatique d'un dispositif électronique dit terminal, comprenant au moins un microprocesseur, une mémoire non volatile, et une mémoire de travail, au moins une application informatique dite programme client, ledit terminal étant apte à communiquer avec un second dispositif électronique dit module de sécurité, contenant au moins un microprocesseur, et une mémoire non volatile,
**caractérisé en ce que,** le procédé comporte au moins les étapes de :
• Activation d'un programme informatique dit "veilleur numérique", dans ledit module de sécurité, et définition d'une durée dite "période",
• Réception, par ledit "veilleur numérique", d'informations, issues dudit programme client,
• Enregistrement, dans une mémoire non volatile dudit module de sécurité, de tout ou partie des dites informations, dans une mémoire non volatile dudit module de sécurité.

2. Procédé selon la revendication 1 **caractérisé en ce que** si le délai entre la réception de deux informations excède ladite "période", ledit "veilleur numérique" entame une procédure de "restauration".

3. Procédé selon la revendication 2 **caractérisé en ce que** ladite étape de restauration consiste en une écriture, dans une mémoire non volatile dudit élément sécurisé, d'une information indiquant la nécessité de restaurer ladite application client.

4. Procédé selon la revendication 2 **caractérisé en ce que** ladite étape de restauration consiste en l'envoi d'un message.

5. Procédé selon l'une quelconque des revendications 1 à 4, **caractérisé en ce que** ladite information est un message vide, dit PING.

6. Procédé selon l'une quelconque des revendications 1 à 4, **caractérisé en ce que** ladite information est un événement lié à l'exécution dudit programme client.

7. Procédé selon la revendication 6, **caractérisé en ce que** ledit évènement est une commande liée audit programme client.

8. Procédé selon l'une quelconque des revendications 1 à 4, **caractérisé en ce que** ledit signe d'activité est un contexte lié audit programme client.

9. Procédé selon l'une quelconque des revendications 1 à 8, **caractérisé en ce que** l'envoi de ladite information est réalisé par une partie du système d'exploitation dudit terminal.

10. Procédé selon l'une quelconque des revendications 1 à 9, **caractérisé en ce que** l'envoi dudit signe d'activité est réalisé par un programme indépendant, exécuté sur ledit terminal.

11. Procédé selon l'une quelconque des revendications 1 à 10, **caractérisé en ce que** un moyen d'identification dudit programme client est associé à ladite information lors de son enregistrement.

12. Procédé de restauration de l'activité informatique d'un dispositif électronique dit terminal, comprenant au moins un microprocesseur, une mémoire non volatile, et une mémoire de travail, au moins une application informatique dite programme client, ledit terminal étant apte à communiquer avec un second dispositif électronique dit module de sécurité, contenant au moins un microprocesseur, une mémoire non volatile, et une mémoire de travail,
**Caractérisé en ce que,** le procédé comporte au moins les étapes de :
• activation d'un programme informatique dit "veilleur numérique", dans ledit module de sécurité,
• lecture, dans ladite mémoire non volatile dudit module de sécurité d'une information indiquant la nécessité de restaurer ladite application client,
• activation d'au moins un programme informatique dit application client, sur ledit terminal,
• lecture dans ladite mémoire non volatile dudit module de sécurité, d'au moins un évènement informatique enregistré,
• transmission de tout ou partie dudit évènement informatique lu, audit programme client.

13. Procédé selon la revendication 12, **caractérisé en ce que** tout ou partie dudit évènement lu, contient tout ou partie d'un contexte.

14. Procédé selon la revendication 13, **caractérisé en ce que,** préalablement à l'envoi de tout ou partie dudit évènement lu, audit programme client, ledit "veilleur numérique" transmet audit terminal les informations liées au contexte d'exécution dudit évènement, et ordonne audit terminal la restauration dudit contexte.

15. Programme informatique exécuté sur un premier dispositif électronique, permettant l'enregistrement et la restauration de l'activité d'au moins un autre programme informatique dit client, exécuté sur un deuxième dispositif électronique, **caractérisé en ce qu'**il comporte au moins des moyens pour :
• Recevoir des informations liées à l'exécution dudit programme client,
• Enregistrer tout ou partie desdites informations dans une mémoire non volatile dudit premier dispositif électronique
• Ordonner l'exécution dudit programme client sur ledit deuxième dispositif électronique
• Envoyer tout ou partie desdites informations audit programme client

16. Programme informatique selon la revendication 15, **caractérisé en ce que** tout ou partie des dites informations sont des événements informatiques.

17. Programme informatique selon la revendication 15, **caractérisé en ce que** tout ou partie des dites informations contiennent tout ou partie d'un contexte.

18. Programme informatique selon la revendication 17, **caractérisé en ce qu'**il comporte des moyens pour :
• transmettre audit terminal ledit contexte,
• ordonner audit terminal la restauration dudit contexte.
